# EUROPEAN PATENT SPECIFICATION

(11) **EP 4 599 346 B1**
(45) Date of publication and mention of the grant of the patent: **15.07.2026**
(21) Application number: 23769291.8
(22) Date of filing: 19.09.2023
(51) Int. Cl.: G06F 21/46, G06F 16/901, G06F 40/30, G06N 5/022, G06N 20/00, G06Q 50/00, H04L 9/40, G06Q 30/00

(54) **AUTHENTICATION METHOD**
AUTHENTIFIZIERUNGSVERFAHREN
PROCÉDÉ D'AUTHENTIFICATION

(30) Priority: 03.10.2022 EP 22199348; 03.10.2022 GB 202214497
(43) Date of publication of application: 13.08.2025
(73) Proprietor: British Telecommunications public limited company, London, Greater London E1 8EE (GB)
(72) Inventor: SMITH-CREASEY, Max, London E1 8EE (GB); ROSCOE, Jonathan, London E1 8EE (GB)
(74) Representative: British Telecommunications public limited company Intellectual Property Department
(86) International application number: PCT/EP2023/075770
(87) International publication number: WO 2024/074300

(56) References cited:
- CN-A- 114 003 881
- KUMAR VISHWAJEET ET AL: "Difficulty-Controllable Multi-hop Question Generation from Knowledge Graphs", 17 October 2019, 16TH EUROPEAN CONFERENCE - COMPUTER VISION - ECCV 2020, CORNELL UNIVERSITY LIBRARY, 201 OLIN LIBRARY CORNELL UNIVERSITY ITHACA, NY 14853, PAGE(S) 382 - 398, XP047524270

## Description

### FIELD OF THE INVENTION

The present disclosure relates to an authentication method.

### BACKGROUND

Authentication is generally required whenever a user is granted access to a secure system or location. Most authentication methods confirm user identities by presenting the user with one or more authentication challenges which require the user to respond with something they know (e.g. a password or PIN), something they have (e.g. a one-time password) and/or something they are (e.g. biometric information). Multi-factor authentication techniques require at least two of these factors for successful authentication, such as a password known by the user and one-time token generated by a smartphone app.

However, there are limitations to each of these factors. Knowledge-based factors require the user to remember special information such as a password, which is susceptible to being forgotten (e.g. if the user has not accessed a service for a prolonged period). Factors based on something a user has require the user to always carry a device or token with them, which can be inconvenient. Factors based on biometric information require access to specialist sensors such as fingerprint readers or facial recognition cameras, but not all systems have such capabilities.

CN114003881A discloses an identity verification method and device, electronic equipment and a storage medium, and relates to the technical field of network security, wherein the method comprises the steps: obtaining first historical film watching data of a user; generating a first verification problem for the first historical film watching data; and verifying the identity of the user by using the first verification question.

KUMAR ET AL: "Difficulty-Controllable Multi-hop Question Generation from Knowledge Graphs" discloses an end-to-end neural network-based method for automatic generation of complex multi-hop questions over knowledge graphs.

Accordingly, there is a need for authentication methods that do not require specialised hardware and do not require users to remember special information.

### SUMMARY OF THE INVENTION

According to a first aspect of the invention, there is provided a computer-implemented authentication method comprising: providing a knowledge graph for a user, wherein nodes of the knowledge graph represent entities associated with the user and edges of the knowledge graph represent semantic relationships between the entities; selecting a first node of the knowledge graph; determining a path length and a count of paths (or indirect paths) between the first node and each node of a plurality of nodes of the knowledge graph other than the first node, identifying a second node of the knowledge graph such that information associated with the second node has a user obviousness value than an attacker obviousness value of the information, the user obviousness value quantifying an expected obviousness of the information to the user, the attacker obviousness value quantifying an expected obviousness of the information to an attacker, wherein the second node is identified based on the determined path length and count of paths for each node of the plurality of nodes; and generating an authentication challenge for the user based on the information associated with the second node.

The knowledge graph for the user may be any knowledge graph in which the nodes represent entities (such as people/objects/places/events/information/data/concepts etc.) and the edges represent semantic relationships between the entities (e.g. family/friendship/geographic proximity/ownership etc.). As an example, the knowledge graph may be generated based on data associated with a social media account of the user.

The knowledge graph and/or the data contained therein may be retrieved or otherwise received from a database or other form of local or remote storage (e.g. local memory).

The first node may be selected arbitrarily (e.g. if one of the nodes represents the user or the name of the user then this node may be selected) or the first node may be selected based upon a node attribute such as centrality or degree. For example, a centrality value may be calculated for each node in the knowledge graph and the node having the greatest centrality value may be selected as the first node. Alternatively, a degree value (number of edges each node has) may be calculated for each node and the node having the greatest degree value may be selected as the first node. Using the node with the highest centrality or degree as the first node increases the expected obviousness to the user (the user is more likely to know information associated with a central/highly connected node).

The plurality of nodes of the knowledge graph other than the first node may include all nodes in the knowledge graph other than the first node, or it may include only a (proper) subset of all nodes other than the first node. When a subset of nodes is used, this subset may be chosen to include all nodes that are not directly connected to the first node and/or that are within a predetermined distance of the first node.

An indirect path refers to any path between two nodes that goes via one or more nodes other than the first and second nodes (such paths by definition require at least two edges). To avoid double counting, the count of paths should preferably exclude cycles (i.e. paths that include the same edge more than once); such paths are referred to herein as non-cycling paths. The path length and count of indirect paths may be computed using any suitable method, such as Dijkstra's algorithm. The count of indirect paths may optionally be truncated to include only paths that are shorter than a predetermined maximum path length.

The path length between any two nodes may be the shortest path between the nodes, or it may be an average (i.e. mean, median or mode) of all (non-cycling) paths between the two nodes.

Unless specified otherwise, the term "distance" used herein should be understood to refer to either the total number of edges between two nodes or the total (summed) weight of all weighted edges between two nodes.

The second node may be identified in various ways. For example, identifying the second node may involve using a trained machine learning algorithm. The expected obviousness may be an estimated or predicted obviousness and may also be referred to as a familiarity. The expected obviousness to the user and/or to the attacker may optionally be calculated explicitly (e.g. by a trained machine learning algorithm or using one or more formulae) or implicitly (e.g. during execution of a trained machine learning algorithm).

The authentication challenge may be generated in various ways. For example, the user may be asked to explain the relationship between the entities represented by the first and the second nodes, or the user may be asked to provide information associated with the entity represented by second node (such as a name). A person skilled in the art will recognise that generation of the challenge will depend upon the type of data represented in the knowledge graph and by the first and second nodes, and such a person will be able to implement a suitable authentication challenge without undue burden.

The method may further comprise receiving a successful response to the authentication challenge and authenticating the user.

The method may optionally involve determining at least one of an expected obviousness to the user and an expected obviousness to the attacker. Each expected obvious may be optionally represented quantitively as a number (i.e. the expected obviousness to the user may be represented as an expected user obviousness value, and the expected obviousness to the attacker may be represented as an expected attacker obviousness value).

The expected obviousness to the user for a given node represents how obvious (or familiar) data or information associated with that node is predicted to be to the user (i.e. how likely the user is to know information associated with the second node), and the expected user obviousness value quantifies the expected obviousness to the user. Likewise, the expected obviousness to the attacker for a given node represents how obvious data or information associated with that node is predicted to be to an attacker (i.e. how likely an attacker is to know information associated with the second node), and the expected attacker obviousness value quantifies the expected obviousness to the attacker.

The expected obviousness to the user (an therefore the expected user obviousness value) the and/or the expected obviousness to the attacker (and therefore the expected attacker obviousness value) may optionally be based on at least one of a category of the first node and/or the second node (e.g. a category may represent a type of the node, such as a friend, family member, etc.), an entry time of at least one of the first node and the second node (e.g. the time at which the node was added to the knowledge graph or to the user's network), a total number of direct connections between the first node and the second node, a total number of indirect (and preferably non-cycling) paths between the first node and the second node, and a path length between the first node and the second node (e.g. a shortest path length or a mean path length along all possible non-cycling paths between the first node and the second node). For example, a value may be calculated or otherwise determined/assigned for one or more of these criteria, and the obviousness may be calculated using e.g. a weighted sum/product of the values.

Alternatively, the expected obviousness to the user and/or the expected obviousness to the attacker may be based on identifying that the semantic relationship between the first node and the second node matches a predefined graph motif. For example, a motif that is common in online social networks may be used to identify entities that are not directly connected but have high likelihood of familiarity. A graph motif is a part of a larger graph that is a subgraph that appears with significant frequency, and they are often indicative of common relationships between nodes.

Identifying the second node may comprise ranking the plurality of nodes based on the determined path lengths and/or the counts of (non-cycling) paths (or indirect paths); iterating through the plurality of nodes in order of the ranking (i.e. from highest to lowest) until a candidate node of the plurality of nodes has a higher expected obviousness to the user than to the attacker (and optionally an expected attacker obviousness value that is below a predetermined attacker obviousness threshold value and/or an expected user obviousness value that is above a predetermined user obviousness threshold value); and selecting the candidate node as the second node.

The ranking for each node may be calculated using a weighted product or sum of the respective path length and counts. For example, the ranking for a node may be calculated by dividing the count of paths by the path length, where one or both of the count and path length may be weighted. Alternatively, the path length may be subtracted from the count of paths (once again, one or both of the count and path length may be weighted). Suitable weightings may be determined based on factors such as security requirements and/or the type of information in the knowledge graph. Alternatively, ranking the nodes may instead involve ordering the nodes according to the path counts and then by the path lengths (or vice-versa). It should be understood that other methods may also be used to rank the nodes, and these examples should not be taken to be limiting.

Rather than iterating through the nodes in strict rank order, candidate nodes having a ranking in a top predetermined percentile range may alternatively be selected at random until a candidate node is chosen having a higher expected obviousness to the user than to the attacker (optionally also verifying expected attacker and/or user obviousness values against the predetermined attacker and/or user obviousness thresholds respectively as described above). This random selection carries an additional advantage over traditional knowledge-based authentication in that the resulting authentication challenge can be different every time because the knowledge graph can randomly select from a list of nodes that satisfy the below obviousness criteria. Therefore an attacker that steals a password that a user has used would not be able to reuse it as next time the authentication system may require a different piece of information computed from the knowledge graph.

Identifying the second node may optionally comprise verifying that the expected attacker obviousness value is less than a predetermined attacker obviousness threshold value. Verifying that the expected attacker obviousness value is less than a predetermined attacker obviousness threshold value increases the security of the authentication by ensuring that the attacker is unlikely to be able to successfully respond to the authentication challenge.

Identifying the second node may optionally comprise verifying that the expected user obviousness value is greater than a predetermined user obviousness threshold value. Verifying that the expected user obviousness value is greater than a predetermined user obviousness threshold value ensures that the challenge is based on information that the user is likely to know.

Alternatively, identifying the second node may comprise identifying a plurality of nodes in the knowledge graph (other than the first node) having an expected user obviousness value that is greater than a predetermined user obviousness threshold value and an expected attacker obviousness value that is less than a predetermined attacker obviousness threshold value; and selecting one of the plurality of nodes as the second node. The second node may be selected from the plurality of nodes at random, or it may alternatively be selected as the node of the plurality of nodes having the lowest expected obviousness to the attacker. Comparing the expected user obviousness value and expected attacker obviousness value to respective thresholds ensures that the authentication challenge can be successfully completed by the user with a high probability whilst also ensuring that an attacker is unlikely to be able to respond successfully. Selecting the second node at random ensures that the user is not presented with the same challenge every time (thereby preventing replay attacks and similar), whereas selecting the node with the lowest expected obviousness minimises the likelihood of an attacker successfully authenticating.

The authentication may optionally be an account recovery procedure (e.g. to reset a user's password when the existing password has been forgotten, or when a user has lost access to another authentication factor such as an authentication token).

According to a second aspect of the invention, there is provided a data processing apparatus comprising one or more processors configured to perform the method of the first aspect. The term "apparatus" should be understood herein to include (among others) individual apparatuses/devices/systems as well as apparatuses/devices/systems formed of multiple components (e.g. formed of multiple sub-apparatus/sub-devices/subsystems each having one or more processors or sub-processors) such as distributed processing systems.

According to a third aspect of the invention, there is provided a computer program comprising instruction which, when executed by a processor, cause the processor to carry out the method of the first aspect.

According to a fourth aspect of the invention, there is provided a computer-readable data carrier comprising the computer program of the third aspect. The term "computer-readable data carrier" should be understood herein to include (among others) removable and non-removable computer-readable storage media (both transient and non-transient), as well as other formats of data carrier, including data signals.

### BRIEF DESCRIPTION OF THE FIGURES

Aspects of the present disclosure will now be described by way of example with reference to the accompanying figures, in which:
Figure 1 is a schematic of an exemplary data processing apparatus;
Figure 2 illustrates an exemplary knowledge graph;
Figure 3 illustrates an inferred relationship in a knowledge graph; and
Figure 4 is a flowchart of an authentication process.

### DETAILED DESCRIPTION

A knowledge graph, also known as a semantic network, represents a network of real-world interlinked entities, such as objects, events, situations, or concepts etc., and illustrates the sematic relationships between them. This information is usually stored in a graph database and visualized as a graph structure. Knowledge graphs are commonly used in search engines to provide suggested related results, for example using the PageRank algorithm (https://en.wikipedia.org/wiki/PageRank).

PageRank is a link analysis algorithm which assigns a numerical weighting to each element of a hyperlinked set of documents, such as the World Wide Web, with the purpose of "measuring" its relative importance within the set. The algorithm may be applied to any collection of entities with reciprocal quotations and references. The mathematics of PageRank are entirely general and apply to any graph or network in any domain. Thus, PageRank is now regularly used in bibliometrics, social and information network analysis, and for link prediction and recommendation. PageRank is a type of centrality index. Centrality indices are answers to the question "What characterizes an important vertex?" The answer is given in terms of a real-valued function on the vertices of a graph, where the values produced are expected to provide a ranking which identifies the most important nodes.

Authentication is the process of verifying the identity of a user by requesting some information in the form of either knowledge, a token, or a biometric. The present invention provides an improved authentication method that exploits obscure connections on knowledge graphs to identify strong semantic relationships which are likely to be known by a user but are unlikely to be known to an attacker who is attempting to gain unauthorised access. In particular, the present invention relies on dynamic knowledge extracted from knowledge graphs that it is likely the user will know. This differs to traditional knowledge-based authentication where the knowledge is static and input the same way each time (e.g. when using a PIN or password).

The use of dynamic knowledge (as opposed to static knowledge used by conventional authentication methods) means that the authentication method of the present invention is less vulnerable to certain attacks such as keyloggers, brute force attacks, dictionary attacks, phishing attacks and man-in-the-middle attacks. In addition, the present invention does not require the user to create and/or remember a special code (i.e. password), which makes it well-suited to scenarios such as account recovery when a password is forgotten.

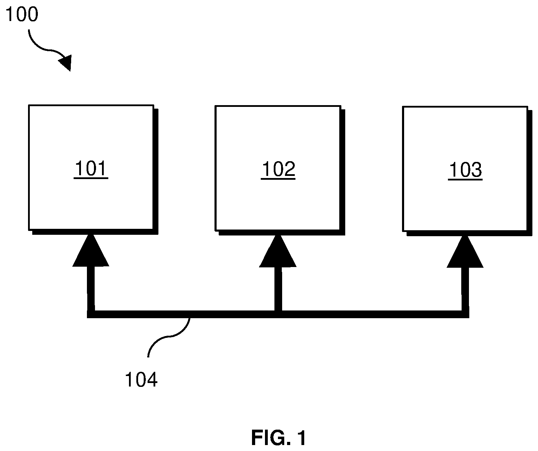

Figure 1 schematically illustrates an example of a data processing apparatus capable of performing any of the methods described herein. It comprises a processor 101 operably coupled to both a memory 102 and an interface (I/O) 103 via a bus 104.

The memory 102 can optionally comprise computer program instructions which, when the program is executed by the processor 101, cause the data processing apparatus 100 to carry out any of the methods described herein. Alternatively or additionally, the interface 103 can optionally comprise one or both of a physical interface configured to receive a data carrier having such instructions stored thereon and a receiver configured to receive a data carrier signal carrying such instructions.

The receiver, when present, can be configured to receive messages. It can comprise one or more wireless receiver modules and/or one or more wired receiver modules. The interface 103 can optionally comprise a transmitter configured to transmit messages. The transmitter, when present, can comprise one or more wireless transmitter modules and/or one or more wired transmitter modules.

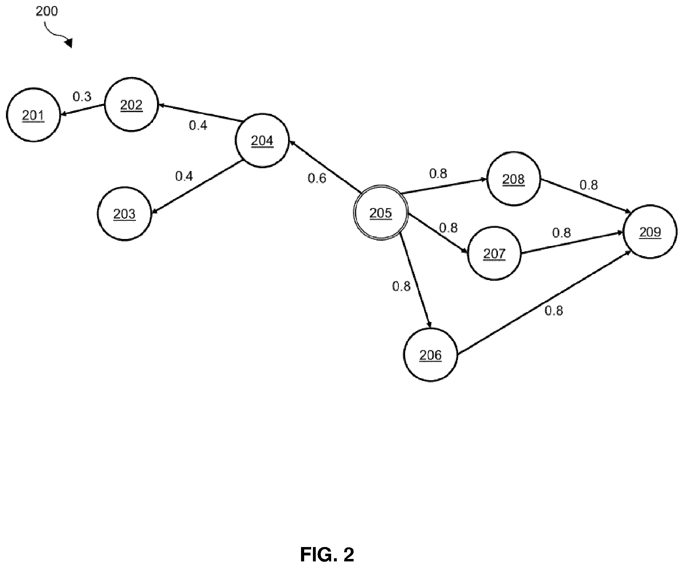

Figure 2 shows a visualisation of an exemplary knowledge graph 200. While this knowledge graph 200 is represented as image, it should be understood that a knowledge graph may be represented in other forms that are not necessarily visual, for example as an abstract data structure stored in computer memory.

The illustrated knowledge graph 200 has nine nodes 201-209 (which may also be referred to by other names such as vertices) connected by edges (which may also be referred to by other names such as links) illustrated by arrows (it should be noted that the illustrated one-way arrows could be replaced with directionless edges and/or two-way arrows depending upon the specific relationships represented by the edges).

Each node represents an entity (or datapoint) such as a movie, director, actor etc. These entitles can be tangible real-world entities, or they may be non-tangible entities (e.g. concepts or ideas). The edges represent semantic relationships between the nodes. These relationships can take various forms, such as "is a", "belongs to", "is related to", "lives with" etc. For example, the node 205 may represent a user, and the connected nodes 206-208 may represent friends of the user. In this case, the edges between node 205 and the connected nodes 206-208 may represent a relationship such as "knows" or "is friends with" etc.

Not all relationships in a knowledge graph are necessary equal. The illustrated edges are each assigned a weight, which may optionally depend upon the type of relationship between the nodes. For example, the edge between nodes 205 and 204 has weight 0.6, and the edges between nodes 205 and 206-208 have weight 0.8. In the scenario where node 205 represents a user and node 204 represents a film the user has watched, the edge from node 205 to node 204 may represent a "has watched" semantic relationship, whereas the edges from node 205 to nodes 206-208 (which have higher weight values) may each represent an "is friends with" semantic relationship.

In addition to having different edge weights, relationships between datapoints may be reinforced by multiple links (for example, movies may be linked by multiple actors, directors, etc.).

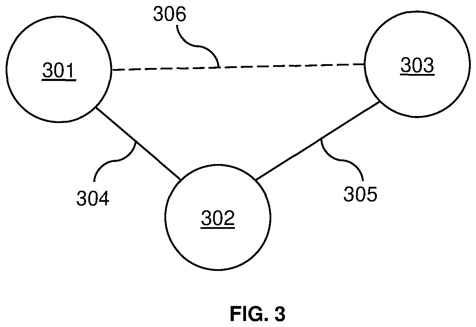

While the edges in the knowledge graph 200 represent direct links between nodes (and therefore between entities) it is also possible to infer indirect relationships between entities. Figure 3 illustrates an example of such an indirect relationship. In Figure 3, node 301 is directly connected to node 302 by edge 304, and node 302 is directly connected to node 303 by edge 305. There is also an inferred relationship between nodes 301 and 303, represented by dashed line 306.

For example, if node 301 represents an actor, node 302 may represent a film in which the actor has starred (in which case the edge 304 may represent the relationship "stars in"). Node 303 may in turn represent the director of the film (in which case the edge 305 may represent the relationship "directed by"). Although there is no direct edge between the actor and the director in the knowledge graph, it can be inferred that the actor stars in a film directed by the director, and this inferred relationship is represented by dashed line 306.

While the inferred relationship 306 is based on traversing two direct edges in the knowledge graph, it should be understood that inferred relationships can also be identified between more remote nodes (e.g. it may be possible to infer a relationship between nodes 201 and 209 for the knowledge graph 200 shown in Figure 2).

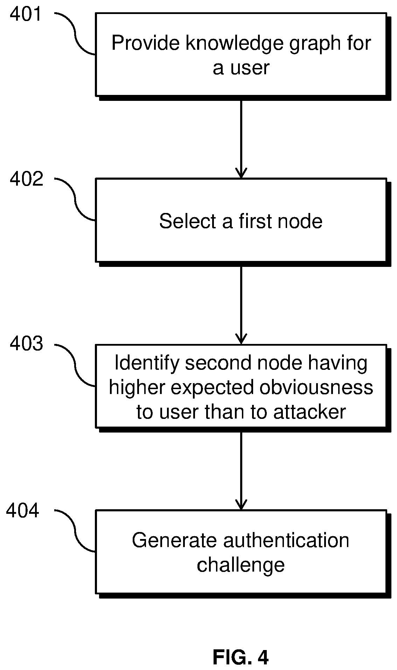

An authentication method that exploits semantic relationships represented by a knowledge graph is illustrated in Figure 4.

In step 401, a knowledge graph, such as the knowledge graph 200 shown in Figure 2, is provided. This step may involve retrieving or otherwise receiving the knowledge graph from a database, memory or other data storage structure, or it may involve generating or updating a knowledge graph using known techniques, e.g. based on a data associated with a user's profile (conversations, contact list, interactions, likes, internet history, movie history, purchase history, etc.).

A first node of the knowledge graph is selected in step 402. This first node may be selected randomly (or pseudo randomly), or it may be selected deterministically, e.g. by selecting a node associated with the name of the user who is attempting to authenticate. Alternatively, a node having a greatest centrality or degree value may be selected as the first node (one skilled in the art will appreciate that there are numerous approaches to determining node centrality and that any suitable approach may be selected for the purpose of selecting the first node), or a significant node may be identified using the PageRank algorithm or a hub and spoke model or similar.

In step 403, a second node is identified that is associated with information that has a higher expected (or estimated/anticipated) obviousness to the user who is attempting to authenticate than to an attacker. In other words, a second node is selected that is associated with information that is anticipated to be more obvious to the user than to an attacker (which may be a particular known person/party/entity or may be an arbitrary notional/potential attacker). The information associated with the second node could be the entity itself represented by the second node and/or the relationship (or inferred relationship) between the first node and the second node.

Identifying the second node may optionally involve determining the (shortest) path lengths from the first node to a plurality of other nodes in the knowledge graph and a count of the number of paths (optionally restricted to indirect paths) between the first node and each of the other nodes. The plurality of other nodes may include all nodes in the knowledge graph except the first node, or it may include a subset of these nodes (e.g. only those within a predefined distance of the first node). The path lengths and numbers of paths can be determined using well-established graph theoretic approaches such as Dijkstra's algorithm. In the example given in Figure 2, the first node may be node 205 and may represent the user. The path lengths and path counts from node 205 to all other nodes are as shown in the table below:

| **Node label** | **Number of paths (n)** | **Shortest path length (l)** |
|---|---|---|
| 201 | 1 | 1.3 |
| 202 | 1 | 1.0 |
| 203 | 1 | 1.0 |
| 204 | 1 | 0.6 |
| 206 | 1 | 0.8 |
| 207 | 1 | 0.8 |
| 208 | 1 | 0.8 |
| 209 | 3 | 1.6 |

It should be noted that an average (i.e. mean, median or modal) path length could be used in place of the shortest path length.

A ranking value may be assigned to each node based on the formula ranking (r) = number of paths (n) divided by shortest path length. Using this formula, node 209 will have the highest ranking.

The relationship between nodes 205 and 209 can then be assessed to decide whether information associated with node 209 is likely to be more obvious to the user than to an attacker. For example, if node 205 represents the user and nodes 206-208 represent people the user knows, node 209 may represent another person that the people represented by nodes 206-208 know (i.e. a friend of a friend). As the user and the person associated with node 209 share common contacts/friends, it is likely that the user will be at least slightly familiar with this person (e.g. they may have met at parties but not be directly connected on social media). However, it is unlikely that an attacker would be familiar with the person associated with node 209 and/or their relationship to the person associated with node 205 (this information would not generally be readily found on a search engine).

In contrast, an inferred relationship such as that shown in Figure 3 (where an actor has worked with a particular director) is much more likely to be public knowledge available to an attacker, so an authentication challenge based on this relationship generally would not be as strong. The strength of the authentication challenge can optionally be enhanced by verifying that the expected obviousness to an attacker is below a predetermined threshold value when identifying the second node.

The expected obviousness to the attacker and to the user can be determined in various ways. Obviousness values may be explicitly calculated (e.g. using formulas and/or machine learning techniques), or a machine learning algorithm/predictive model or similar may be used to identify nodes that are expected to be more obvious to a user than to an attacker (in which case actual values of the obviousness may not be calculated at all or may be calculated implicitly by the algorithm/model). Where a machine learning algorithm is used to identify the second node, it may be trained using conventional training techniques. For example, a supervised training method may be used in which examples of semantic relationships having different obviousness values/levels are provided to the machine learning algorithm.

As an example, obviousness to a user might be computed as *O*(*u*) = (*T + C + E + N)* / *4,* where *T, C, E* and *N* are values representing obviousness due to time, category, number of edges and/or paths, and node significance respectively, which may be values between 0 and 1 retrieved from e.g. a lookup table or similar (these values could be specified by a provider of the authentication service, e.g. based on analysis or estimations).

Similarly, obviousness to an attacker might be computed as *O*(*a*) = *(S + E + C')* / 3, where *S, E,* and C' are values representing obviousness due to number of edges and/or paths between the first node and second node, category (the category value C' for an attacker may be different to that (C) for a user, e.g. because a user is more likely than an attacker to recognise entities in a "friends" or "family" category), and searchability of the information (e.g. does it appear on search engines). Again, a lookup table of pre-computed scores between 0 and 1 might be used to obtain these values. It should be understood that there are various methods by which the expected obviousness could be quantified, and that these methods are not limited to the examples given above.

As mentioned above, identifying the second node may optionally involve verifying that the expected obviousness to an attacker is below a predetermined attacker obviousness threshold. Likewise, it may optionally be verified that the obviousness to an attacker is above a predetermined user obviousness threshold. For example, it might be required that *O*(*u*) be at least 0.8 and *O*(*a*) be below 0.2 for security (these values are exemplary only and other values could be chosen as necessary by one skilled in the art).

In one example, a plurality of nodes in the knowledge graph may be identified that all have an expected user obviousness value that is greater than the predetermined user obviousness threshold value and an expected attacker obviousness value that is less than a predetermined attacker obviousness threshold value, one of these nodes may be selected as the second node (either at random or by e.g. picking the node having the lowest expected attacker obviousness value).

Once the second node has been identified, an authentication challenge is then generated in step 404 based on the information associated with the second node. For example, the challenge may be based on the relationship between the nodes, such as an inferred relationship that is determined using the approach described in relation to Figure 3, and/or it may be generated based on information associated with the entity represented by the second node.

Examples of challenges include asking the user to identify the relationship between two nodes (i.e. entities) on the graph, to identify which node (i.e. entity) fulfils a certain relationship, or to provide information associated with a node (e.g. by presenting the user with a picture of a person associated with that node and asking for that person's name).

In the case of the knowledge graph 200 shown in Figure 2, if the first node is node 205 representing the user and the second node is node 209 representing a "friend of a friend", the challenge may ask the user to identify the person associated with node 209 or to identify other information associated with that node, such as the three mutual connections associated with nodes 206-208. It should be understood that various challenges can be generated depending on the specific details of the first node and second node (e.g. the category, what entities the nodes represent etc.), and the examples given herein for generating authentication challenges should not be construed as limiting the invention.

In the above disclosure, any reference to the obviousness of a node should be understood to mean the obviousness of information associated with that node (e.g. the entity represented by that node and/or the (potentially inferred) relationship between that node and the first node). One skilled in the art will recognise that there are many ways in which the obviousness of such information could be quantified, and any suitable obviousness quantification can be used to implement the present invention, including (but not limited to) those disclosed herein.

The preceding description is presented to enable any person skilled in the art to make and use the system and/or perform the method of the invention and is provided in the context of a particular application. Various modifications to the disclosed examples will be readily apparent to those skilled in the art. It is intended that the specification be considered as exemplary only.

Where this application lists one or more method steps, the presence of precursor, follow-on and intervening method steps is not excluded unless such exclusion is explicitly indicated. Similarly, where this application lists one or more components of a device or system, the presence of additional components, whether separate or intervening, is not excluded unless such exclusion is explicitly indicated.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claims. That is, the operations/steps may be performed in any technically feasible order, unless otherwise specified, and embodiments may include additional or fewer operations/steps than those disclosed herein. It is further contemplated that executing or performing a particular operation/step before, partially or entirely contemporaneously with, or after another operation is in accordance with the described embodiments.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. Such a computer program may be embodied as source code or undergo compilation for implementation on a processing device, apparatus or system or may be embodied as object code, for example.

Such a computer program may be encoded as executable instructions embodied in a carrier medium, non-transitory computer-readable storage device and/or a memory device in machine or device readable form, for example in volatile memory, non-volatile memory, solid-state memory, magnetic memory such as disk or tape, optically or magneto-optically readable memory such as magnetic tape, compact disk (CD), digital versatile disk (DVD) or other media that are capable of storing code and/or data. Such a computer program may alternatively or additionally be supplied from a remote source embodied in a communications medium such as an electronic signal, radio frequency carrier wave or optical carrier wave. Such carrier media are also envisaged as aspects of the present invention.

Such instructions, when executed by a processor (or one or more computers, processors, and/or other devices) may cause the processor (the one or more computers, processors, and/or other devices) to perform at least a portion of the methods described herein.

Where a processor is referred to herein, this is to be understood to refer to a single processor or multiple processors operably connected to one another. Similarly, where a memory is referred to herein, this is to be understood to refer to a single memory or multiple memories operably connected to one another.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, smartphones, tablets, network personal computers (PCs), minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

User devices can include, without limitation, static user devices such as PCs and mobile user devices such as smartphones, tablets, laptops and smartwatches.

Receivers and transmitters as described herein may be standalone or may be comprised in transceivers. A communication link as described herein comprises at least one transmitter capable of transmitting data to at least one receiver over one or more wired or wireless communication channels. Wired communication channels can be arranged for electrical or optical transmission. Such a communication link can optionally further comprise one or more relaying transceivers.

User input devices can include, without limitation, microphones, buttons, keypads, touchscreens, touchpads, trackballs, joysticks, mice, gesture control devices and brain control (e.g. electroencephalography, EEG) devices. User output devices can include, without limitation, speakers, buzzers, display screens, projectors, indicator lights, haptic feedback devices and refreshable braille displays. User interface devices can comprise one or more user input devices, one or more user output devices, or both.

## Claims

1. A computer-implemented authentication method comprising:
providing (401) a knowledge graph (200) for a user, wherein nodes of the knowledge graph (200) represent entities associated with the user and edges of the knowledge graph (200) represent semantic relationships between the entities;
selecting (402) a first node of the knowledge graph;
determining a path length and a count of paths between the first node and each node of a plurality of nodes of the knowledge graph (200) other than the first node;
identifying (403) a second node of the knowledge graph such that information associated with the second node has a user obviousness value that is higher than an attacker obviousness value of the information, the user obviousness value quantifying an expected obviousness of the information to the user, the attacker obviousness value quantifying an expected obviousness of the information to an attacker, wherein the second node is identified based on the determined path length and count of paths for each node of the plurality of nodes; and
generating (404) an authentication challenge for the user based on the information associated with the second node.

2. The method according to claim 1, further comprising receiving a successful response to the authentication challenge and authenticating the user.

3. The method according to claim 2, wherein identifying (403) the second node comprises:
ranking each node of the plurality of nodes based on the path length and/or the count of paths;
iterating through the plurality of nodes randomly or in order of the ranking until information associated with a candidate node of the plurality of nodes has a higher expected obviousness value to the user than to the attacker; and
selecting the candidate node as the second node.

4. The method according to claim 2, wherein identifying (403) the second node comprises:
ranking each node of the plurality of nodes based on the path length and/or the count of indirect paths;
randomly selecting candidate nodes of the plurality of nodes having a ranking in a predetermined top percentile range until a candidate node is selected for which information associated with the candidate node has a higher expected obviousness value to the user than to the attacker; and
selecting the candidate node as the second node.

5. The method according to any preceding claim, wherein identifying (403) the second node comprises determining an expected attacker obviousness value and verifying that the expected attacker obviousness value is less than a predetermined attacker obviousness threshold value.

6. The method according to any preceding claim, wherein identifying (403) the second node comprises determining an expected user obviousness value and verifying that the expected user obviousness value is greater than a predetermined user obviousness threshold value.

7. The method according to claim 1 or claim 2, wherein identifying (403) the second node comprises:
identifying a plurality of nodes in the knowledge graph (200), other than the first node, associated with information having an expected user obviousness value that is greater than a predetermined user obviousness threshold value and an expected attacker obviousness value that is less than a predetermined attacker obviousness threshold value; and
selecting one of the plurality of nodes as the second node.

8. The method according to claim 7, wherein selecting one of the plurality of nodes as the second node comprises selecting a node of the plurality of nodes associated with information having a lowest expected attacker obviousness value.

9. The method according to claim 7, wherein selecting one of the plurality of nodes as the second node comprises selecting a node of the plurality of nodes at random.

10. The method according to any preceding claim, wherein the user obviousness value and/or attacker obviousness value to the attacker are based on at least one of:
a category of the first node and the second node,
an entry time of at least one of the first node and the second node,
a total number of direct connections between the first node and the second node,
a total number of indirect paths between the first node and the second node, and
a path length between the first node and the second node.

11. The method according to any preceding claim, wherein selecting (402) the first node comprises calculating a centrality value for each node in the knowledge graph (200) and selecting a node having the highest centrality value as the first node.

12. A data processing apparatus (100) comprising one or more processors (101) configured to perform the method of any preceding claim.

13. A computer program comprising instructions which, when executed by a computer, cause the computer to carry out the method of any of claims 1 to 11.

14. A computer-readable data carrier comprising the computer program of claim 13.

## Patentansprüche

1. Computerimplementiertes Authentisierungsverfahren, das Folgendes umfasst:
Bereitstellen (401) eines Wissensgraphen (200) für einen Benutzer, wobei Knoten des Wissensgraphen (200) Entitäten repräsentieren, die mit dem Benutzer verknüpft sind, und Kanten des Wissensgraphen (200) semantische Beziehungen zwischen den Entitäten repräsentieren;
Auswählen (402) eines ersten Knotens des Wissensgraphen; Bestimmen einer Pfadlänge und einer Anzahl von Pfaden zwischen dem ersten Knoten und jedem Knoten einer Vielzahl von Knoten des Wissensgraphen (200) außer dem ersten Knoten;
Identifizieren (403) eines zweiten Knotens des Wissensgraphen, so dass Informationen, die mit dem zweiten Knoten verknüpft sind, einen Benutzeroffensichtlichkeitswert aufweisen, der höher als ein Angreiferoffensichtlichkeitswert der Informationen ist, wobei der Benutzeroffensichtlichkeitswert eine erwartete Offensichtlichkeit der Informationen für den Benutzer quantifiziert, wobei der Angreiferoffensichtlichkeitswert eine erwartete Offensichtlichkeit der Informationen für einen Angreifer quantifiziert, wobei der zweite Knoten basierend auf der bestimmten Pfadlänge und Anzahl von Pfaden für jeden Knoten der Vielzahl von Knoten identifiziert wird; und
Erzeugen (404) einer Authentisierungsaufforderung für den Benutzer basierend auf den Informationen, die mit dem zweiten Knoten verknüpft sind.

2. Verfahren nach Anspruch 1, ferner umfassend das Empfangen einer erfolgreichen Antwort auf die Authentisierungsaufforderung und Authentisieren des Benutzers.

3. Verfahren nach Anspruch 2, wobei das Identifizieren (403) des zweiten Knotens Folgendes umfasst:
Einstufen jedes Knotens der Vielzahl von Knoten basierend auf der Pfadlänge und/oder der Anzahl von Pfaden;
Iterieren durch die Vielzahl von Knoten zufällig oder in der Reihenfolge der Einstufung, bis Informationen, die mit einem Kandidatenknoten der Vielzahl von Knoten verknüpft sind, einen höheren erwarteten Offensichtlichkeitswert für den Benutzer als für den Angreifer aufweisen; und
Auswählen des Kandidatenknotens als zweiten Knoten.

4. Verfahren nach Anspruch 2, wobei das Identifizieren (403) des zweiten Knotens Folgendes umfasst:
Einstufen jedes Knotens der Vielzahl von Knoten basierend auf der Pfadlänge und/oder der Anzahl von indirekten Pfaden;
zufälliges Auswählen von Kandidatenknoten der Vielzahl von Knoten mit einer Einstufung in einem vorbestimmten oberen Perzentilbereich, bis ein Kandidatenknoten ausgewählt wird, für den Informationen, die mit dem Kandidatenknoten verknüpft sind, für den Benutzer einen höheren erwarteten Offensichtlichkeitswert als für den Angreifer aufweisen; und
Auswählen des Kandidatenknotens als zweiten Knoten.

5. Verfahren nach einem der vorhergehenden Ansprüche, wobei das Identifizieren (403) des zweiten Knotens das Bestimmen eines erwarteten Angreiferoffensichtlichkeitswerts und das Verifizieren umfasst, dass der erwartete Angreiferoffensichtlichkeitswert kleiner als ein vorbestimmter Angreiferoffensichtlichkeits-Schwellenwert ist.

6. Verfahren nach einem der vorhergehenden Ansprüche, wobei das Identifizieren (403) des zweiten Knotens das Bestimmen eines erwarteten Benutzeroffensichtlichkeitswerts und das Verifizieren umfasst, dass der erwartete Benutzeroffensichtlichkeitswert größer als ein vorbestimmter Benutzeroffensichtlichkeits-Schwellenwert ist.

7. Verfahren nach Anspruch 1 oder Anspruch 2, wobei das Identifizieren (403) des zweiten Knotens Folgendes umfasst:
Identifizieren einer Vielzahl von Knoten in dem Wissensgraphen (200), außer dem ersten Knoten, die mit Informationen verknüpft sind, die einen erwarteten Benutzeroffensichtlichkeitswert, der größer als ein vorbestimmter Benutzeroffensichtlichkeits-Schwellenwert ist, und einen erwarteten Angreiferoffensichtlichkeitswert, der kleiner als ein vorbestimmter Angreiferoffensichtlichkeits-Schwellenwert ist, aufweisen; und
Auswählen eines der Vielzahl von Knoten als zweiten Knoten.

8. Verfahren nach Anspruch 7, wobei das Auswählen eines der Vielzahl von Knoten als zweiten Knoten das Auswählen eines Knotens der Vielzahl von Knoten umfasst, der mit Informationen verknüpft ist, die einen niedrigsten erwarteten Angreiferoffensichtlichkeitswert aufweisen.

9. Verfahren nach Anspruch 7, wobei das Auswählen eines der Vielzahl von Knoten als zweiten Knoten das zufällige Auswählen eines Knotens der Vielzahl von Knoten umfasst.

10. Verfahren nach einem der vorhergehenden Ansprüche, wobei der Benutzeroffensichtlichkeitswert und/oder der Angreiferoffensichtlichkeitswert für den Angreifer auf mindestens einem der folgenden basieren:
einer Kategorie des ersten Knotens und des zweiten Knotens,
einer Eintrittszeit des ersten Knotens und/oder des zweiten Knotens,
einer Gesamtanzahl von direkten Verbindungen zwischen dem ersten Knoten und dem zweiten Knoten,
einer Gesamtanzahl von indirekten Pfaden zwischen dem ersten Knoten und dem zweiten Knoten, und
einer Pfadlänge zwischen dem ersten Knoten und dem zweiten Knoten.

11. Verfahren nach einem der vorhergehenden Ansprüche, wobei das Auswählen (402) des ersten Knotens das Berechnen eines Zentralitätswerts für jeden Knoten in dem Wissensgraphen (200) und das Auswählen eines Knotens mit dem höchsten Zentralitätswert als ersten Knoten umfasst.

12. Datenverarbeitungssystem (100), umfassend einen oder mehrere Prozessoren (101), der/die zum Durchführen des Verfahrens nach einem der vorhergehenden Ansprüche ausgelegt ist/sind.

13. Computerprogramm, das Anweisungen umfasst, die, wenn sie von einem Computer ausgeführt werden, den Computer veranlassen, das Verfahren nach einem der Ansprüche 1 bis 11 auszuführen.

14. Computerlesbarer Datenträger, der das Computerprogramm nach Anspruch 13 umfasst.

## Revendications

1. Procédé d'authentification mis en œuvre par ordinateur comprenant les étapes suivantes :
fournir (401) un graphe de connaissances (200) pour un utilisateur, où les nœuds du graphe de connaissances (200) représentent les entités associées à l'utilisateur et les arêtes du graphe de connaissances (200) représentent les relations sémantiques entre les entités ;
sélectionner (402) un premier nœud du graphe de connaissances ;
déterminer une longueur de chemin et un comptage de chemins entre le premier nœud et chaque nœud d'une pluralité de nœuds du graphe de connaissances (200) autre que le premier nœud ;
identifier (403) un deuxième nœud du graphe de connaissances de telle sorte que les informations associées au deuxième nœud aient une valeur d'évidence pour l'utilisateur supérieure à une valeur d'évidence pour l'attaquant des informations, la valeur d'évidence pour l'utilisateur quantifiant un degré d'évidence attendu des informations pour l'utilisateur, la valeur d'évidence pour l'attaquant quantifiant un degré d'évidence attendu des informations pour un attaquant, où le deuxième nœud est identifié sur la base de la longueur de chemin déterminée et du nombre de chemins pour chaque nœud de la pluralité de nœuds ; et
générer (404) un défi d'authentification pour l'utilisateur sur la base des informations associées au deuxième nœud.

2. Procédé selon la revendication 1, comprenant en outre de recevoir une réponse réussie au défi d'authentification et à l'authentification de l'utilisateur.

3. Procédé selon la revendication 2, dans lequel l'identification (403) du deuxième nœud comprend les étapes suivantes :
classer chaque nœud de la pluralité de nœuds sur la base de la longueur de chemin et/ou du comptage des chemins ;
itérer à travers la pluralité de nœuds de manière aléatoire ou dans l'ordre du classement jusqu'à ce que les informations associées à un nœud candidat de la pluralité de nœuds aient une valeur d'évidence attendue plus élevée pour l'utilisateur que pour l'attaquant ; et
sélectionner le nœud candidat comme deuxième nœud.

4. Procédé selon la revendication 2, dans lequel l'identification (403) du deuxième nœud comprend les étapes suivantes :
classer chaque nœud de la pluralité de nœuds sur la base de la longueur de chemin et/ou du comptage des chemins indirects ;
sélectionner aléatoirement des nœuds candidats de la pluralité de nœuds ayant un classement dans une plage de percentiles supérieure prédéterminée jusqu'à ce qu'un nœud candidat soit sélectionné pour lequel les informations associées au nœud candidat ont une valeur d'évidence attendue supérieure pour l'utilisateur que pour l'attaquant ; et
sélectionner le nœud candidat comme deuxième nœud.

5. Procédé selon l'une quelconque des revendications précédentes, dans lequel l'identification (403) du deuxième nœud comprend de déterminer une valeur d'évidence pour l'attaquant attendue et de vérifier que la valeur d'évidence pour l'attaquant attendue est inférieure à une valeur seuil d'évidence pour l'attaquant prédéterminée.

6. Procédé selon l'une quelconque des revendications précédentes, dans lequel l'identification (403) du deuxième nœud comprend de déterminer une valeur d'évidence pour l'utilisateur attendue et de vérifier que la valeur d'évidence pour l'utilisateur attendue est inférieure à une valeur seuil d'évidence pour l'utilisateur prédéterminée.

7. Procédé selon la revendication 1 ou la revendication 2, dans lequel l'identification (403) du deuxième nœud comprend les étapes suivantes :
identifier une pluralité de nœuds dans le graphe de connaissances (200), autres que le premier nœud, associés à des informations ayant une valeur d'évidence attendue pour l'utilisateur qui est supérieure à une valeur seuil d'évidence prédéterminée pour l'utilisateur et une valeur d'évidence attendue pour l'attaquant qui est inférieure à une valeur seuil d'évidence prédéterminée pour l'attaquant ; et
sélectionner un nœud parmi la pluralité de nœuds en tant que deuxième nœud.

8. Procédé selon la revendication 7, dans lequel la sélection de l'un de la pluralité de nœuds en tant que deuxième nœud comprend de sélectionner le nœud de la pluralité de nœuds associés à des informations ayant la valeur d'évidence pour l'attaquant attendue la plus faible.

9. Procédé selon la revendication 7, dans lequel la sélection de l'un de la pluralité de nœuds en tant que deuxième nœud comprend de sélectionner aléatoirement un nœud de la pluralité de nœuds.

10. Procédé selon l'une quelconque des revendications précédentes, dans lequel la valeur d'évidence pour l'utilisateur et/ou la valeur d'évidence pour l'attaquant vis-à-vis de l'attaquant sont basées sur au moins l'un des éléments parmi les suivants :
la catégorie du premier nœud et du deuxième nœud,
le temps d'entrée d'au moins l'un du premier nœud et du deuxième nœud,
le nombre total de connexions directes entre le premier nœud et le deuxième nœud,
le nombre total de chemins indirects entre le premier nœud et le deuxième nœud, et
la longueur du chemin entre le premier nœud et le deuxième nœud.

11. Procédé selon l'une quelconque des revendications précédentes, dans lequel la sélection (402) du premier nœud comprend de calculer une valeur de centralité pour chaque nœud dans le graphe de connaissances (200) et de sélectionner un nœud ayant la valeur de centralité la plus élevée en tant que premier nœud.

12. Appareil (100) de traitement de données comportant un ou plusieurs processeurs (101) configurés pour réaliser le procédé selon l'une quelconque des revendications précédentes.

13. Programme d'ordinateur comprenant des instructions qui, lorsqu'elles sont exécutées par un ordinateur, amènent l'ordinateur à exécuter le procédé selon l'une quelconque des revendications 1 à 11.

14. Support de données lisible par ordinateur comprenant le programme d'ordinateur de la revendication 13.
